Europäisches Patentamt

European Patent Office

Office européen des brevets

(19)

(11) **EP 0 955 683 A1**

(12) # DEMANDE DE BREVET EUROPEEN

(43) Date de publication:
**10.11.1999 Bulletin 1999/45**

(51) Int Cl.6: **H01M 4/24**, H01M 4/62,
H01M 10/36, H01M 10/26

(21) Numéro de dépôt: **99401045.2**

(22) Date de dépôt: **29.04.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **07.05.1998 FR 9805836**

(71) Demandeur: **ALCATEL
75008 Paris (FR)**

(72) Inventeurs:
• **Bouet, Jacques
75015 Paris (FR)**

• **Desprez, Philippe
91220 Bretigny sur Orge (FR)**
• **Duchemin, Catherine
91160 Longjumeau (FR)**

(74) Mandataire: **Laroche, Danièle et al
COMPAGNIE FINANCIERE ALCATEL
Dépt. Propriété Industrielle,
30, avenue Kléber
75116 Paris (FR)**

(54) **Accumulateur à électrolyte alcalin contenant une électrode négative au zinc**

(57) Accumulateur (1) à électrolyte alcalin comportant une électrode négative au zinc (3) et un additif qui est un composé organique composé d'un cycle aromatique portant de un à trois substituants, ledit premier substituant étant un groupe hydroxyle, et ledit deuxième substituant étant choisi parmi un groupe hydroxyle, un groupe méthyle, et un groupe éther incluant une chaîne alkyle de 1 à 10 atomes de carbone terminée par un groupe hydrophile.

# FIG. 1

EP 0 955 683 A1

**Description**

La présente invention concerne un accumulateur à électrolyte alcalin contenant une électrode négative à base de zinc.

Cet accumulateur possède une anode de zinc métallique et un électrolyte à base d'hydroxyde de potassium KOH contenant de l'oxyde de zinc ZnO. Mais son utilisation se heurte à la mauvaise cyclabilité de l'électrode de zinc. Les causes de défaillance principales de l'accumulateur sont liées à la solubilité excessive du produit de décharge ZnO. Les processus de charge et de décharge du zinc font appel à un mécanisme de dissolution -précipitation et sont décrits par les deux réactions électrochimiques et chimiques suivantes :

(I) formation d'ions zincates solubles résultant de l'oxydation du zinc:

$$Zn + 4OH^- \longleftrightarrow Zn(OH)_4^{2-} + 2e^-$$

(II) précipitation des ions zincates sur l'électrode :

$$Zn(OH)_4^{2-} \longleftrightarrow ZnO\downarrow + H_2O + 2\,OH^-$$

D'une part la solubilité importante de l'oxyde de zinc sous forme d'ions zincates est à l'origine du changement de forme de l'électrode. Ce phénomène s'amplifie à chaque cycle. Ce changement de forme se caractérise par une densification de la matière active qui réduit son volume poreux, donc sa surface électrochimiquement active, et entraîne une diminution de la capacité déchargée.

D'autre part la formation de dendrites, responsables de courts-circuits, et le dégagement d'hydrogène en fin de charge contribue aussi au dysfonctionnement de l'accumulateur.

Enfin, en se déposant à la surface de l'électrode, l'oxyde de zinc ZnO résultant de la précipitation des ions zincates a un effet passivant et réduit la surface électrochimiquement active de l'électrode. Ceci entraîne une diminution de la capacité déchargée.

De nombreux travaux ont été entrepris pour résoudre ces problèmes (K. Bass et al. "Methods for the reduction of shape change and dendritic growth in zinc-based secondary cells" J. Power Sources, 35 (1991) 333-351).

Une amélioration a été apportée par l'introduction d'une électrode au zinc comprenant de la poudre de zinc et un liant qui est généralement un polymère. Le polymère présente principalement un intérêt mécanique en formant un réseau qui retient le zinc pulvérulent. Mais cette solution ne suffit pas à résoudre le problème. D'autres voies ont ensuite été explorées.

Une première voie est l'incorporation d'additif dans l'électrode. On a proposé d'ajouter des composés minéraux notamment des métaux dont la surtension d'hydrogène est plus élevée que celle du zinc, des oxydes métalliques, qui se réduisent avant les ions zincate, ou encore des métaux alcalins.

Les travaux de V.K. Nartey et al. (J. of Power Sources, 52 (1994) 217-222) montre que la plupart des additifs testés sont actifs pour réduire le dégagement d'hydrogène, à l'exception du 4-tert-butyl phénol qui l'augmente. Le 2-isopropylphénol et le 2,4-dinitrophénol n'ont pas été retenu pour l'évaluation en accumulateur Zn-MnO$_2$ car ils ne parviennent pas à abaisser suffisamment le courant anodique.

L'additif peut simplement être déposé à la surface de l'électrode. Le document WO-97/17737 décrit une électrode au zinc pour un générateur étanche rechargeable à électrolyte alcalin capable de dépasser une vingtaine de cycles. L'anode comprend de la poudre de zinc recouverte d'un film d'un surfactant et/ou d'acétate d'indium. Ce traitement permet de retarder la formation de dendrites et le dégagement d'hydrogène. Mais le traitement avec le surfactant seul ne permet pas d'éviter les fuites, les courts-circuits et une augmentation de la pression interne.

Une deuxième voie consiste à introduire dans l'électrolyte un composé soluble ayant une forte surtension de dégagement d'hydrogène qui ne perturbe pas le fonctionnement électrochimique. Parmi ceux-ci on peut citer des composés minéraux comme des métaux sous forme ionique ou des non-métaux, et des composés organiques. Ce sont des agents de surface, appelés aussi surfactants, tensio-actifs ou brillanteurs, comme le "TRITON X-100", le "FORAFAC" ou des émulphogènes. Ces composés ont été étudiés en vue d'obtenir des dépôts métalliques lisses et brillants. Ils retardent le dégagement d'hydrogène mais sont sans effet sur le changement de forme de l'électrode. Les dépôts obtenus sont compacts et comportent des grosses cristallites ; ils ont donc une faible surface électrochimiquement active.

La présente invention a pour but de proposer un accumulateur à électrolyte alcalin comportant une électrode négative au zinc dont la durée de vie est prolongée sans que les autres performances électrochimiques en soient sensiblement affectées.

L'objet de la présente invention est un accumulateur à électrolyte alcalin comportant une électrode négative au zinc, et un additif qui est un composé organique constitué d'un cycle aromatique φ portant de un à trois substituants, caractérisé en ce que ledit premier substituant est un groupe hydroxyle, et en ce que ledit deuxième substituant est choisi parmi un groupe hydroxyle, un groupe méthyle, et un groupe éther incluant une chaîne alkyle de 1 à 10 atomes de carbone terminée par un groupe hydrophile dans le cas où le cycle aromatique porte plus d'un substituant.

D'une part ce composé permet d'augmenter le rendement faradique de charge (défini par le rapport entre la quantité d'électricité fournie et la capacité réellement chargé), et donc la capacité que l'électrode de zinc est capable de restituer à chaque cycle. Ainsi il retarde l'apparition du dégagement d'hydrogène et réduit la formation de microdendrites.

D'autre part ce composé a comme avantage d'agir sur la morphologie des produits de charge et de décharge du zinc. En effet la présence du composé organique selon l'invention favorise la formation d'un dépôt de zinc mousseux, d'aspect mat et à cristallites très petites. Le changement de forme de l'électrode est ralenti et la surface électrochimiquement active reste élevée.

La synergie de ces deux propriétés a pour effet d'augmenter la capacité et de prolonger la durée de vie de l'électrode de zinc.

Le composé est constitué d'un radical phényle -$\varphi$-OH, comme par exemple le phénol (ou hydroxybenzène), sur lequel un deuxième, voire un troisième substituant, peuvent être ajoutés. Il n'est pas envisageable de fixer plus de trois substituants sur le cycle aromatique pour des raisons d'encombrement stérique.

Selon une première variante, le deuxième substituant est un groupe hydroxyle -OH. Le composé est par exemple la p-hydroquinone (appelé aussi benzènediol-1,4) ou le pyrocatechol (appelé aussi benzènediol-1,2). Lorsque le deuxième substituant est un groupe hydroxyle -OH, il est de préférence placé en position méta. Dans ce cas le composé est par exemple le résorcinol (appelé aussi 1,3-diphénol, ou benzènediol-1,3, ou dihydroxybenzène).

Selon une deuxième variante, le deuxième substituant est un groupe méthyle. Le composé est par exemple le o-crésol (appelé aussi 2-méthyle-phénol) ou le m-crésol (appelé aussi 3-méthyle-phénol). Lorsque le deuxième substituant est un groupe méthyle, il est de préférence placé en position para. Le composé est par exemple le para-crésol (appelé aussi 4-méthyle-phénol).

Selon une troisième variante, le deuxième substituant est un groupe éther de la forme -O-$(CH_2)_p$-X où p = 1 à 10, de préférence p = 4 à 10, portant à son extrémité opposée au cycle aromatique un groupe hydrophile X, comme par exemple -$SO_3H$. Le composé est par exemple l'acide p-méthoxyphénol sulfonique, l'acide o-méthoxyphénol sulfonique, l'acide 4-éthoxyphénol sulfonique ou l'acide 2-éthoxyphénol sulfonique. Lorsque le deuxième substituant est un groupe éther, il est de préférence placé en position méta. Le composé est par exemple l'acide 3-méthoxyphénol sulfonique, l'acide m-éthoxyphénol sulfonique, l'acide m-butoxyphénol sulfonique ou l'acide m-propoxyphénol sulfonique.

Selon un autre mode de réalisation de l'invention, ledit composé porte en outre un troisième substituant choisi parmi un groupe hydroxyle, un groupe méthyle, et un groupe éther incluant une chaîne alkyle de 1 à 10 atomes de carbone terminée par un groupe hydrophile.

Selon une première variante, le troisième substituant est un groupe hydroxyle -OH. Le composé est par exemple le phloroglucinol (appelé aussi benzène triol-1,3,5), le pyrogallol (appelé aussi benzène triol-1,2,3), le benzène triol-1,2,4 ou le 4-méthyle 1,3-benzènediol.

Selon une deuxième variante, le troisième substituant est un groupe méthyle. Le composé est par exemple le un diméthyle phénol, le xylène-2,3 ol ou l'orcinol (appelé aussi 5-méthyle 1,3-benzènediol).

Selon une troisième variante, le troisième substituant est un groupe éther, incluant une chaîne alkyle de 1 à 10 atomes de carbone terminée par un groupe hydrophile. Le composé est par exemple l'acide 4-méthyle, 2-éthoxyphénol sulfonique

Lorsque le premier, le deuxième ou le troisième substituant est choisi parmi un groupe méthyle ou un groupe éther incluant une chaîne alkyle, le substituant peut être au moins partiellement fluoré, et de préférence perfluoré ; il est alors de la forme -$CF_3$ ou -O-$(CF_2)_q$-X où q = 1 à 10 et X est un groupe hydrophile.

Selon une première forme d'exécution de l'invention, ledit électrolyte contient ledit composé dans une proportion supérieure à 0,1% en poids dudit électrolyte, et de préférence dans une proportion comprise entre 0,25% et 1%.

Selon une deuxième forme d'exécution de l'invention, ladite électrode comprend ledit composé, une matière active pulvérulente contenant du zinc, un matériau conducteur et un liant polymère, ledit composé étant présent dans une proportion au moins égale à 0,1% en poids de ladite matière active.

De préférence ledit matériau conducteur est un mélange de particules et de fibres conductrices, les particules conductrices ayant une dimension moyenne $D_1$ au plus égale à D/20, D étant le diamètre moyen de ladite matière active, et les fibres conductrices ayant une dimension moyenne $D_2$ au plus égale à D et une longueur moyenne $L_2$ au moins égale à 25 fois la valeur de $D_2$.

L'invention s'applique notamment aux accumulateurs zinc-oxygène (Zn-$O_2$) qui possèdent une anode de zinc métallique, une cathode de carbone contenant éventuellement un catalyseur d'oxydoréduction de l'oxygène, et un électrolyte à base d'hydroxyde de potassium KOH contenant de l'oxyde de zinc (ZnO). Elle s'applique également aux accumulateurs nickel-zinc (Ni-Zn) dont la cathode contient de l'hydroxyde de nickel.

D'autres caractéristiques et avantages de la présente invention apparaîtront au cours des exemples suivants de réalisation, donnés bien entendu à titre illustratif et non limitatif, et dans le dessin annexé sur lequel:

- la figure 1 représente un accumulateur prismatique comprenant une électrode de zinc,
- la figure 2 est une comparaison de l'évolution de la capacité restituée au cours du cyclage pour un accumulateur contenant un additif selon l'invention dans l'électrolyte et un accumulateur de référence ne contenant pas d'additif,

- la figure 3 est analogue à la figure 2 dans le cas où l'additif est ajoutée dans l'électrode au zinc.

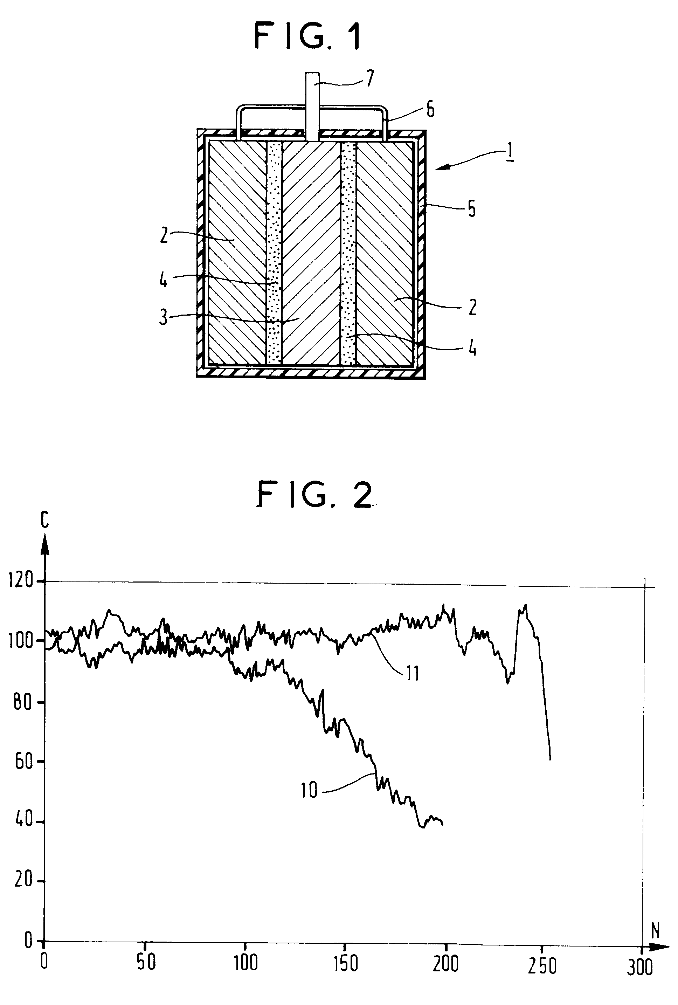

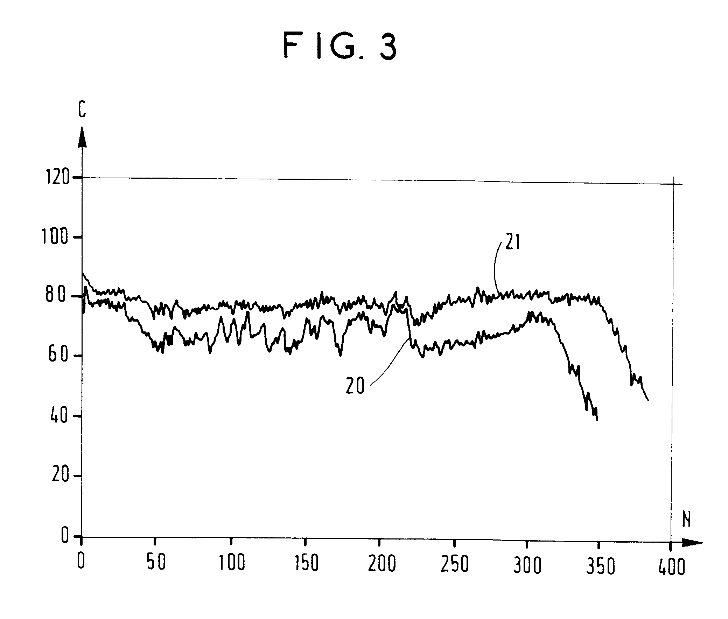

Sur les figures 2 et 3, la capacité restituée C exprimée en % de la capacité nominale est donné en ordonnée, et en abscisse le nombre de cycle N réalisés.

EXEMPLE 1

On réalise un accumulateur 1 représenté sur la figure 1 comprenant deux électrode positive 2 au nickel encadrant une électrode négative 3 au zinc, les électrodes étant séparées par trois couches d'un séparateur 4 de polypropylène de référence "CELGARD 3401" commercialisé par la société HOECHST. Le boîtier 5 est en matériau isolant. Les sorties de courant positive 6 et négative 7 sont reliées respectivement aux électrodes positive 2 et négatives 3.

L'électrode positive de type empâté contient une matière active qui est un hydroxyde à base de nickel et un liant. La pâte contenant la matière active est introduite dans une mousse de nickel de porosité environ 95 %. L'ensemble est séché puis laminé pour obtenir l'électrode.

La matière active négative est un mélange de poudre de zinc métallique, de poudre d'oxyde de zinc (ZnO) et de poudre d'hydroxyde de calcium (Ca(OH)$_2$). On incorpore 5% en poids du liant, qui est du polyfluorure de vinylidène (PVDF), et 5% du matériau conducteur composé d'une poudre de noir d'acétylène de granulométrie moyenne $35.10^{-3}\mu$m et de fibres de carbone graphité de dimension moyenne 10μm et de longueur moyenne 300μm, à 90% en poids de la matière active. On ajuste la viscosité avec un solvant volatil et on dépose cette pâte sur un support qui est une mousse de cuivre. L'ensemble est séché puis laminé pour obtenir une électrode de 10cm$^2$.

On assemble un accumulateur et on l'imprègne d'un électrolyte alcalin contenant de la potasse KOH à la concentration de 5,8N dans laquelle sont dissout 40g/l d'oxyde de zinc (ZnO).

Cet accumulateur, de capacité nominale de 930mAh, est cyclé dans les conditions suivantes :

- charge à 0,2lc jusqu'à une tension d'arrêt de 2,1 Volt, où lc est le courant théorique nécessaire pour décharger la capacité nominale d'un accumulateur en 1 heure ; puis
- décharge à 0,33lc jusqu'à une tension d'arrêt de 1V ; le palier de décharge se trouve à environ 1,65V.

La courbe 10 de la figure 2 montre une décroissance de la capacité après 100 cycles, et après 170 cycles la capacité de l'accumulateur est inférieure à 50% de sa capacité initiale.

EXEMPLE 2

On réalise un accumulateur analogue à celui de l'exemple 1, à l'exception du fait qu'on a ajouté 1% en poids de résorcinol dans l'électrolyte. L'accumulateur est évalué électrochimiquement comme décrit dans l'exemple 1.

La courbe 11 de la figure 2 montre que la chute de capacité ne se produit qu'après 240 cycles.

EXEMPLE 3

On réalise un accumulateur analogue à celui de l'exemple 1, à l'exception du fait que l'électrode négative au zinc est réalisée de la manière suivante.

La matière active négative est un mélange de poudre de zinc métallique, de poudre d'oxyde de zinc (ZnO) et de poudre d'hydroxyde de calcium (Ca(OH)$_2$). On incorpore 2% en poids du liant, qui est un mélange de hydroxyéthylcellulose (HEC) et d'un copolymère de styrène et de butadiène (SBR), et 5% du matériau conducteur composé d'une poudre de noir d'acétylène de granulométrie moyenne $35.10^{-3}\mu$m et de fibres de carbone graphité de dimension moyenne 10μm et de longueur moyenne 300μm, à 90% en poids de la matière active. On ajuste la viscosité avec un solvant volatil et on dépose cette pâte sur un support qui est une mousse de cuivre. L'ensemble est séché puis laminé pour obtenir une électrode de 10cm$^2$.

L'accumulateur est évalué électrochimiquement comme décrit dans l'exemple 1. La courbe 20 de la figure 3 montre qu'un disfonctionnement de l'accumulateur apparaît après 300 cycles.

EXEMPLE 4

On réalise un accumulateur analogue à celui de l'exemple 3, à l'exception du fait que l'électrode de zinc comprend du résorcinol à raison de 0,25% en poids de la matière active.

L'accumulateur est évalué électrochimiquement comme décrit dans l'exemple 1. La courbe 21 de la figure 3 montre que la capacité restituée à chaque cycle est supérieure à celle de l'accumulateur de l'exemple 3 et que la chute de capacité ne se produit qu'après 350 cycles.

**Revendications**

1.  Accumulateur à électrolyte alcalin comportant une électrode négative au zinc, et un additif qui est un composé organique constitué d'un cycle aromatique portant de un à trois substituants, caractérisé en ce que ledit premier substituant est un groupe hydroxyle, et en ce que ledit deuxième substituant est choisi parmi un groupe hydroxyle, un groupe méthyle, et un groupe éther incluant une chaîne alkyle de 1 à 10 atomes de carbone terminée par un groupe hydrophile.

2. Accumulateur selon la revendication 1, dans lequel ledit deuxième substituant est un groupe hydroxyle en position méta.

3. Accumulateur selon la revendication 1, dans lequel ledit deuxième substituant est un groupe méthyle en position para.

4. Accumulateur selon la revendication 1, dans lequel ledit deuxième substituant est un groupe éther incluant une chaîne alkyle de 1 à 10 atomes de carbone terminée par un groupe hydrophile en position méta.

5. Accumulateur selon l'une des revendications précédentes, dans lequel ledit composé porte en outre un troisième substituant choisi parmi un groupe hydroxyle, un groupe éther incluant une chaîne alkyle de 1 à 10 atomes de carbone terminée par un groupe hydrophile, et un groupe méthyle.

6. Accumulateur selon l'une des revendications 1, et 3 à 5, dans lequel ledit deuxième substituant, choisi parmi un groupe méthyle et un groupe éther, incluant une chaîne alkyle de 1 à 10 atomes de carbone terminée par un groupe hydrophile, est perfluoré.

7. Accumulateur selon l'une des revendications précédentes, dans lequel ledit électrolyte contient ledit composé dans une proportion supérieure à 0,1% en poids dudit électrolyte.

8. Accumulateur selon l'une des revendications précédentes, dans lequel ledit électrolyte contient ledit composé dans une proportion comprise entre 0,25% et 1%.

9. Accumulateur selon l'une des revendications 1 à 6, dans lequel ladite électrode comprend ledit composé, une matière active pulvérulente contenant du zinc, un matériau conducteur et un liant polymère, ledit composé étant présent dans une proportion au moins égale à 0,1% en poids de ladite matière active.

10. Accumulateur selon la revendication 9, dans lequel ledit matériau conducteur est un mélange de particules et de fibres conductrices, les particules conductrices ayant une dimension moyenne $D_1$ au plus égale à D/20, D étant le diamètre moyen de ladite matière active, et les fibres conductrices ayant une dimension moyenne $D_2$ au plus égale à D et une longueur moyenne $L_2$ au moins égale à 25 fois la valeur de $D_2$.

# FIG. 1

# FIG. 2

# FIG. 3

# EP 0 955 683 A1

**Office européen des brevets**

## RAPPORT DE RECHERCHE EUROPEENNE

Numéro de la demande

EP 99 40 1045

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | CHEMICAL ABSTRACTS, vol. 83, no. 22, 1 décembre 1975 (1975-12-01) Columbus, Ohio, US; abstract no. 182057, KOBAYASHI, SHIGEO ET AL: "Zinc anode battery" XP002090893 * abrégé * & JP 50 055839 A (MATSUSHITA ELECTRIC INDUSTRIAL CO., LTD., JAPAN) --- | 1 | H01M4/24 H01M4/62 H01M10/36 H01M10/26 |
| D,A | NARTEY V K ET AL: "IDENTIFICATION OF ORGANIC CORROSION INHIBITORS SUITABLE FOR USE IN RECHARGEABLF ALKALINE ZINC BATTERIES" JOURNAL OF POWER SOURCES, vol. 52, no. 2, 1 décembre 1994 (1994-12-01), pages 217-222, XP000532764 * page 217, colonne de droite, alinéa 3 * * page 219; tableau 1 * --- | 1,8 | |
| A | CHEMICAL ABSTRACTS, vol. 128, no. 12, 23 mars 1998 (1998-03-23) Columbus, Ohio, US; abstract no. 143150, OSAWA, SHOYA ET AL: "Zinc batteries containing organic additives" XP002091879 * abrégé * -& PATENT ABSTRACTS OF JAPAN vol. 98, no. 5, 30 avril 1998 (1998-04-30) & JP 10 021956 A (OZAWA AKIYA), 23 janvier 1998 (1998-01-23) * abrégé * & JP 10 021956 A (OZAWA, SHOYA, JAPAN;MASE, SHUNZO) --- -/-- | 1 | **DOMAINES TECHNIQUES RECHERCHES (Int.Cl.6)** H01M |

Le présent rapport a été établi pour toutes les revendications

| Lieu de la recherche | Date d'achèvement de la recherche | Examinateur |
|---|---|---|
| LA HAYE | 11 août 1999 | Gamez, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

8

Office européen
des brevets

**RAPPORT DE RECHERCHE EUROPEENNE**

Numéro de la demande

EP 99 40 1045

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SATO, A. ET AL: "Effects of separator and organic additives for rechargeability of alkaline MnO2-Zn cells" PROG. BATTERIES BATTERY MATER. (1997), 16, 377-387 CODEN: PBBMEF;ISSN: 1099-4467, 1997, XP002090892 * tableau 1 * | 1 | |
| A | WO 92 09113 A (GN BATTERIES AS) 29 mai 1992 (1992-05-29) * page 1, ligne 5 - ligne 10 * * page 4; exemple 1 * | 1 | |
| A | EP 0 571 717 A (MATSUSHITA ELECTRIC IND CO LTD) 1 décembre 1993 (1993-12-01) * page 2, ligne 3 - ligne 7 * * page 2, ligne 53 - page 3, ligne 3 * * page 3, ligne 34 - ligne 42 * | 1 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 11 août 1999 | Gamez, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

FPO FORM 1503 03 82 (P04C02)

**ANNEXE AU RAPPORT DE RECHERCHE EUROPEENNE
RELATIF A LA DEMANDE DE BREVET EUROPEEN NO.**

EP 99 40 1045

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-1999

| Document brevet cité au rapport de recherche | Date de publication | Membre(s) de la famille de brevet(s) | Date de publication |
|---|---|---|---|
| JP 50055839 A | 16-05-1975 | AUCUN | |
| WO 9209113 A | 29-05-1992 | DK 267290 A | 08-05-1992 |
| EP 0571717 A | 01-12-1993 | JP 5325954 A | 10-12-1993 |
| | | AU 3372593 A | 02-12-1993 |
| | | CA 2090146 A,C | 26-11-1993 |
| | | DE 69303117 D | 18-07-1996 |
| | | DE 69303117 T | 23-01-1997 |
| | | KR 137191 B | 15-06-1998 |
| | | US 5384214 A | 24-01-1995 |

EPO FORM P0460

Pour tout renseignement concernant cette annexe : voir Journal Officiel de l'Office européen des brevets, No.12/82